# EUROPEAN PATENT APPLICATION

(11) **EP 1 110 803 A2**
(43) Date of publication of application: **27.06.2001**
(21) Application number: 00500139.1
(22) Date of filing: 29.06.2000
(51) Int. Cl.: B60L 15/20

(54) **Differential gear system for children's vehicles**

(30) Priority: 24.12.1999 ES 9902845
(71) Applicant: Rodriguez Martinez, S.C., 03440 Ibi, Alicante (ES)
(72) Inventor: Rodriguez Ferre,José Manuel, 03440 Ibi(Alicante) (ES)
(74) Representative: Canadell-Isern, Roberto

(57) **Abstract**

A DIFFERENTIAL GEAR SYSTEM FOR CHILDREN'S VEHICLES with a two-wheel drive, designed to simulate a real vehicle's differential gear system, essentially consisting of arranging a reduction gear on each of the vehicle's rear driving wheels, with a direct current motor, the rated working voltage of which is half the voltage of the vehicle's power supply, namely two identical 6V motors (1a), (1b), connected to a 12 V battery (2), the system being provided to be closed by means of an electric wiring circuit (3), the two motors (1a), (1b) being connected in tandem with the vehicle's power supply or battery (2).

## Description

### OBJECT OF THE INVENTION

The object of the present Patent application is a differential gear system for children's vehicles, which, in addition to the function for which it was designed, contributes a number of advantages that shall be set out hereinafter, besides others inherent in the arrangement and construction thereof.

### BACKGROUND OF THE INVENTION

With reference to the current state of the art it is noteworthy that children's vehicles are now devoid of a differential gear system and are provided with an electrical circuit essentially comprising a battery; a motor; a wiring; a circuit-breaker; and one or two accelerators suitably arranged on either of the chassis footrests, each of which acts directly on buttons making the electrical circuit to allow electric current through to supply the motor, which drives the rear wheel propelling the vehicle through the appropriate transmission.

### DESCRIPTION OF THE INVENTION

The differential gear system for children's vehicles subject of the present invention consists of simulating a real vehicle's differential gear in order to provide a differential gear system for two-wheel drive vehicles used by children.

Now, therefore, the present invention has devised arranging a reduction gear on each of the rear vehicle driving wheels, with a direct current motor, the rated working voltage of which is half the voltage of the vehicle's power supply, the system being closed through an electric wiring circuit, the two motors being connected in tandem with the vehicle's power supply or battery.

This system thus provides the following effect: if the effort to be made by one of the wheels increases, then that wheel will reduce its revolutions which the other wheel will increase, thereby for the effort to be distributed in accordance with the position of each wheel.

Consequently, when turning with the vehicle, the effort on the inner-side wheel is greater than the effort on the outer-side wheel, and the revolutions of the inner-side wheel will therefore be reduced and the number of turns of the outer-side wheel will increase, thereby for the turning range to be smaller than in traditional systems. The difference real vehicles have is thus simulated.

The present invention also allows the following advantages to be obtained over traditional systems:
- In starting the vehicles, ampere consumption is less, i.e. the vehicles are started with less power and more gradually.
- In turning, the traditional system increases the motor ampere consumption, whereas with the differential gear system of the invention consumption remains the same as when travelling along a straight line, i.e. the effort does not increase when turning.
- The efforts made on a rougher surface are distributed between both motors, depending on the effort to be made by one wheel or the other, thereby for the motor ampere consumption peaks to be smaller.
- Furthermore and as a result of all the above-mentioned factors, the operating range with the same supply battery increases with respect to traditional systems.

In order to complete the description made hereinafter and for an easier understanding of its characteristics, attached to this specification is a set of drawings whose figures show the most significant details of the invention for illustrative and non-limiting purposes.

### BRIEF DESCRIPTION OF THE DRAWINGS

Figure 1 is a general electrical diagram of the differential gear system.

Figure 2 is an example of a real electrical diagram with a differential gear system.

### DESCRIPTION OF A PREFERRED EMBODIMENT

With reference to the above figures and in accordance with the references numerals used, the same are seen to show a differential gear system for children's vehicles with a two-wheel drive, simulating a real vehicle's differential gear system, arranging to that effect a reduction gear on each of the rear driving wheels, with a direct current motor, the rated working voltage of which is half the voltage of the vehicle's power supply or battery, namely two identical 6V motors - -1a-, -1b-, connected to a 12 V battery -2-, the system being closed by means of an electric wiring circuit -3-, the two motors -1a-, -1b- being connected in tandem with the vehicle's power supply or battery -2-.

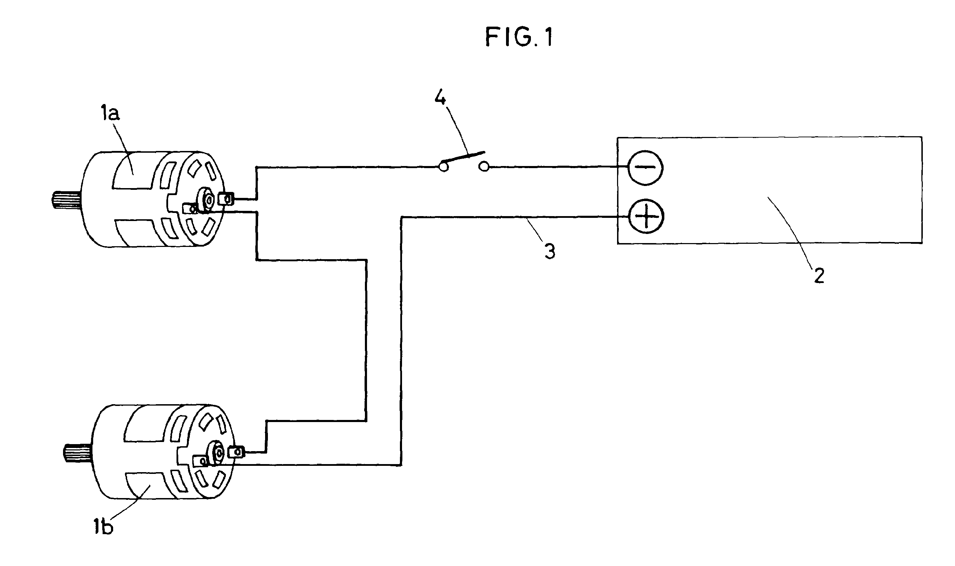

Figure 1 represents a general electrical diagram of the differential gear system showing two identical motors -1a-, -1b-, the rated working voltage of which is half the voltage of the power supply -2-, the system being closed by means of a wiring circuit -3-, by means of a button -4-, the two motors -1a-, -1b-, being connected in tandem with the vehicle's power supply or battery -2-.

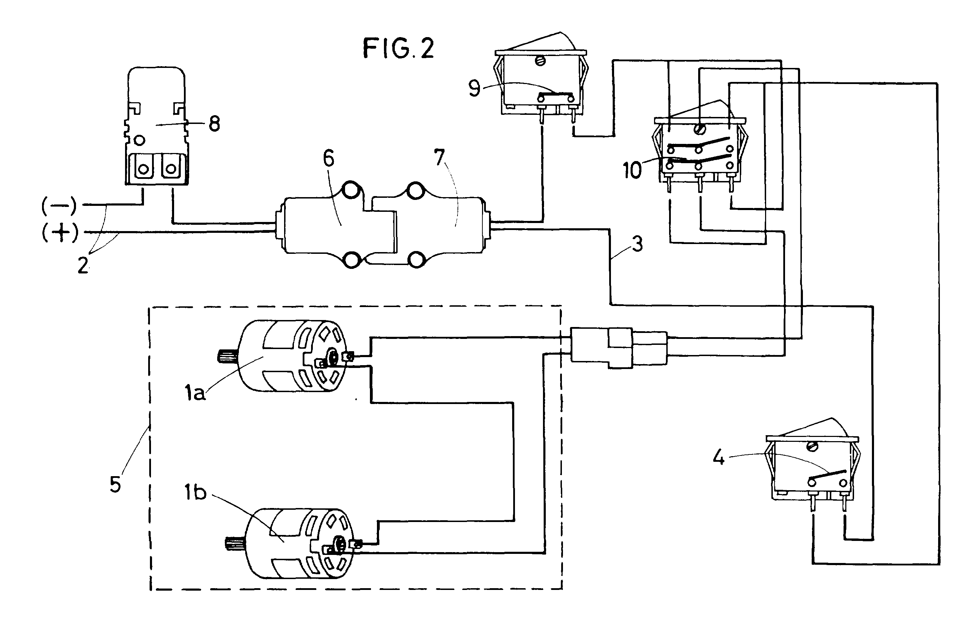

Figure 2 represents an example of a real electrical diagram with a differential gear system, comprising the two identical motors - -1a-, -1b-, the rated working voltage of which is half the voltage of the vehicle's power supply -2-, namely the two identical 6V motors -1a-, -1b-, connected to a 12 V battery -2-; an electric wiring circuit -3- with which the system connecting the two motors -1a-, -1b- in tandem -5- with the vehicle's 12 V battery -2- is closed; a button -4-, closing the system and driven by the vehicle's accelerator; a pin -6- connected to the battery -2-, and a pin -7- connected to the wiring -3-, both pins being moreover interconnected in the vehicle's functional position; a circuit-breaker -8-; a button -9- breaking the circuit when it acts on the brake; and a switch -10- reversing the direction of travel.

## Claims

1. A DIFFERENTIAL GEAR SYSTEM FOR CHILDREN'S VEHICLES with a two-wheel drive, designed to simulate a real vehicle's differential gear system, **characterised** in that it consists of arranging a reduction gear on each of the vehicle's rear driving wheels, with a direct current motor, the rated working voltage of which is half the voltage of the vehicle's power supply, namely two identical 6V motors (1a), (1b), connected to a 12 V battery (2), the system being provided to be closed by means of an electric wiring circuit (3), the two motors (1a), (1b) being connected in tandem with the vehicle's power supply or battery (2).

2. A DIFFERENTIAL GEAR SYSTEM FOR CHILDREN'S VEHICLES, in accordance with claim 1, **characterised** in that in a preferred embodiment the vehicle's real electrical diagram with a differential gear system comprises the two identical motors, the rated working voltage of which is half the voltage of the vehicle's power supply, namely the aforesaid two identical 6V motors (1a), (1b), connected to a 12 V battery (2); an electric wiring circuit (3) with which the system connecting the two motors (1a), (1b) in tandem (5) with the vehicle's 12 V battery (2) is closed; a button (4), closing the system, driven by the vehicle's accelerator; a pin (6) connected to the battery (2), and a pin (7) connected to the wiring (3), both pins being moreover interconnected in the vehicle's functional position; a circuit-breaker (8); a button (9) breaking the circuit when it acts on the brake; and a switch (10) reversing the direction of travel.
